# EUROPEAN PATENT APPLICATION

(11) **EP 3 163 764 A1**
(43) Date of publication of application: **03.05.2017**
(21) Application number: 14899610.1
(22) Date of filing: 11.08.2014
(51) Int. Cl.: H04B 5/02

(54) **MOBILE PAYMENT METHOD AND APPARATUS AS WELL AS NEAR FIELD COMMUNICATION DEVICE**

(71) Applicant: HUAWEI TECHNOLOGIES CO., LTD., Shenzhen Guangdong 518129 (CN)
(72) Inventor: ZHAO, Yang, Shenzhen Guangdong 518129 (CN); WANG, Yahui, Shenzhen Guangdong 518129 (CN); LI, Guoqing, Shenzhen Guangdong 518129 (CN)
(74) Representative: Pfenning, Meinig & Partner mbB
(86) International application number: PCT/CN2014/084091
(87) International publication number: WO 2016/023152

(57) **Abstract**

The present invention discloses a mobile payment method and apparatus, and a Near Field Communication device, which relate to the field of information technologies and can improve flexibility of mobile payment. The method includes: first receiving, by an NFC device by using NFC, a transaction instruction sent by a card reader; then sending the transaction instruction to an intelligent terminal by using Bluetooth; receiving, by using the Bluetooth, an answer message sent by the intelligent terminal, where the answer message is generated by the intelligent terminal according to the transaction instruction; and finally sending the answer message to the card reader by using the NFC. The present invention is applicable to implementation of mobile payment by using NFC.

## Description

### TECHNICAL FIELD

The present invention relates to the field of information technologies, and in particular, to a mobile payment method and apparatus, and a Near Field Communication (English: Near Field Communication, NFC for short) device.

### BACKGROUND

With popularity of smartphones, mobile payment is more widely used. Existing mobile payment mainly includes NFC payment, card swiping payment, and application payment. The NFC payment is a short-distance wireless connection technology, which uses magnetic field induction to implement short-distance communication between electronic devices. A user needs only to put an NFC device close to a card reader, and mobile payment can be implemented.

Currently, according to a method for implementing mobile payment, a mobile phone having an NFC function is used as an NFC device. A process of the mobile payment is specifically as follows: A user puts a mobile phone having an NFC function close to a card reader to receive a transaction instruction sent by the card reader, and then the mobile phone having the NFC function processes the transaction instruction and returns a processing result to the card reader, so as to implement the mobile payment by using the NFC device.

However, when mobile payment is implemented by using a mobile phone having an NFC function, compared with another current payment device such as a bus card, the mobile phone has a larger volume and poorer portability, thereby causing poorer flexibility of implementing mobile payment by using an NFC mobile phone.

### SUMMARY

The present invention provides a mobile payment method and apparatus, and a Near Field Communication device, which can improve flexibility of mobile payment.

The technical solutions used in the present invention are as follows:
According to a first aspect, the present invention provides a mobile payment method, including:
   receiving, by a Near Field Communication NFC device by using NFC, a transaction instruction sent by a card reader;
   sending, by the NFC device, the transaction instruction to an intelligent terminal by using Bluetooth;
   receiving, by the NFC device by using the Bluetooth, an answer message sent by the intelligent terminal, where the answer message is generated by the intelligent terminal according to the transaction instruction; and
   sending, by the NFC device, the answer message to the card reader by using the NFC.

With reference to the first aspect, in a first possible implementation manner of the first aspect, the transaction instruction carries identification information and transaction amount information of a contactless application, where the contactless application is a contactless application corresponding to the card reader; and
the intelligent terminal stores identification information of at least one contactless application and account balance information of the at least one contactless application.

With reference to the first possible implementation manner of the first aspect, in a second possible implementation manner of the first aspect, that the answer message is generated by the intelligent terminal according to the transaction instruction is specifically that:
the intelligent terminal determines account balance information of the contactless application according to the identification information of the contactless application carried in the transaction instruction; and
the intelligent terminal performs transaction processing according to the account balance information of the contactless application and the transaction amount information of the contactless application that is carried in the transaction instruction, and then generates the answer message.

With reference to the second possible implementation manner of the first aspect, in a third possible implementation manner of the first aspect, the answer message carries transaction success information or transaction failure information; where
the transaction success information is generated after the intelligent terminal determines that the account balance information of the contactless application is greater than or equal to the transaction amount information of the contactless application; and
the transaction failure information is generated after the intelligent terminal determines that the account balance information of the contactless application is less than the transaction amount information of the contactless application.

With reference to the first possible implementation manner of the first aspect, the second possible implementation manner of the first aspect, or the third possible implementation manner of the first aspect, in a fourth possible implementation manner of the first aspect, the intelligent terminal includes a secure element SE, where the SE stores the identification information of the at least one contactless application and the account balance information of the at least one contactless application, and the SE is integrated into at least one of a subscriber identity module SIM card, a user identity module UIM card, a secure digital card SD, or the intelligent terminal; and
when the intelligent terminal includes multiple SEs, that the answer message is generated by the intelligent terminal according to the transaction instruction is specifically that:
the intelligent terminal determines an SE corresponding to the contactless application according to the identification information of the contactless application carried in the transaction instruction;
the intelligent terminal determines, in the SE, the account balance information of the contactless application according to the identification information of the contactless application carried in the transaction instruction; and
the intelligent terminal performs transaction processing according to the account balance information of the contactless application and the transaction amount information of the contactless application that is carried in the transaction instruction, and then generates the answer message.

According to a second aspect, the present invention provides a mobile payment apparatus, including:
an NFC receiving unit, configured to receive, by using NFC, a transaction instruction sent by a card reader;
a Bluetooth sending unit, configured to send, to an intelligent terminal by using Bluetooth, the transaction instruction received by the NFC receiving unit;
a Bluetooth receiving unit, configured to receive, by using the Bluetooth, an answer message sent by the intelligent terminal, where the answer message is generated by the intelligent terminal according to the transaction instruction sent by the Bluetooth sending unit; and
an NFC sending unit, configured to send, to the card reader by using the NFC, the answer message received by the Bluetooth receiving unit.

With reference to the second aspect, in a first possible implementation manner of the second aspect,
the transaction instruction received by the NFC receiving unit carries identification information and transaction amount information of a contactless application, where the contactless application is a contactless application corresponding to the card reader; and
the intelligent terminal stores identification information of at least one contactless application and account balance information of the at least one contactless application.

With reference to the first possible implementation manner of the second aspect, in a second possible implementation manner of the second aspect,
the intelligent terminal determines account balance information of the contactless application according to the identification information of the contactless application that is carried in the transaction instruction sent by the Bluetooth sending unit; and
the intelligent terminal performs transaction processing according to the account balance information of the contactless application and the transaction amount information of the contactless application that is carried in the transaction instruction, and then generates the answer message received by the Bluetooth receiving unit.

With reference to the second possible implementation manner of the second aspect, in a third possible implementation manner of the second aspect,
the answer message received by the Bluetooth receiving unit carries transaction success information or transaction failure information; where
the transaction success information is generated after the intelligent terminal determines that the account balance information of the contactless application is greater than or equal to the transaction amount information of the contactless application; and
the transaction failure information is generated after the intelligent terminal determines that the account balance information of the contactless application is less than the transaction amount information of the contactless application.

With reference to the first possible implementation manner of the second aspect, the second possible implementation manner of the second aspect, or the third possible implementation manner of the second aspect, in a fourth possible implementation manner of the second aspect,
the intelligent terminal includes a secure element SE, where the SE stores the identification information of the at least one contactless application and the account balance information of the at least one contactless application, and the SE is integrated into at least one of a subscriber identity module SIM card, a user identity module UIM card, a secure digital memory card SD, or the intelligent terminal; and
when the intelligent terminal includes multiple SEs, the intelligent terminal determines an SE corresponding to the contactless application according to the identification information of the contactless application that is carried in the transaction instruction sent by the Bluetooth sending unit;
the intelligent terminal determines, in the SE, the account balance information of the contactless application according to the identification information of the contactless application carried in the transaction instruction; and
the intelligent terminal performs transaction processing according to the account balance information of the contactless application and the transaction amount information of the contactless application that is carried in the transaction instruction, and then generates the answer message received by the Bluetooth receiving unit.

According to a third aspect, the present invention provides a Near Field Communication NFC device, including:
an NFC communication module, configured to receive, by using NFC, a transaction instruction sent by a card reader;
a processor, configured to forward the transaction instruction received by the NFC communication module to a Bluetooth communication module; and
the Bluetooth communication module, configured to send, to an intelligent terminal by using Bluetooth, the transaction instruction received by the NFC communication module, and receive, by using the Bluetooth, an answer message sent by the intelligent terminal, where the answer message is generated by the intelligent terminal according to the transaction instruction; where
the processor is further configured to forward the answer message received by the Bluetooth communication module to the NFC communication module; and
the NFC communication module is further configured to send, to the card reader by using the NFC, the answer message received by the Bluetooth communication module.

With reference to the third aspect, in a first possible implementation manner of the third aspect,
the transaction instruction received by the NFC communication module carries identification information and transaction amount information of a contactless application, where the contactless application is a contactless application corresponding to the card reader; and
the intelligent terminal stores identification information of at least one contactless application and account balance information of the at least one contactless application.

With reference to the first possible implementation manner of the third aspect, in a second possible implementation manner of the third aspect,
the intelligent terminal determines account balance information of the contactless application according to the identification information of the contactless application that is carried in the transaction instruction sent by the Bluetooth communication module; and
the intelligent terminal performs transaction processing according to the account balance information of the contactless application and the transaction amount information of the contactless application that is carried in the transaction instruction, and then generates the answer message received by the Bluetooth communication module.

With reference to the second possible implementation manner of the third aspect, in a third possible implementation manner of the third aspect,
the answer message received by the Bluetooth communication module carries transaction success information or transaction failure information; where
the transaction success information is generated after the intelligent terminal determines that the account balance information of the contactless application is greater than or equal to the transaction amount information of the contactless application; and
the transaction failure information is generated after the intelligent terminal determines that the account balance information of the contactless application is less than the transaction amount information of the contactless application.

With reference to the first possible implementation manner of the third aspect, the second possible implementation manner of the third aspect, or the third possible implementation manner of the third aspect, in a fourth possible implementation manner of the third aspect,
the intelligent terminal includes a secure element SE, where the SE stores the identification information of the at least one contactless application and the account balance information of the at least one contactless application, and the SE is integrated into at least one of a subscriber identity module SIM card, a user identity module UIM card, a secure digital memory card SD, or the intelligent terminal; and
when the intelligent terminal includes multiple SEs, the intelligent terminal determines an SE corresponding to the contactless application according to the identification information of the contactless application that is carried in the transaction instruction sent by the Bluetooth communication module;
the intelligent terminal determines, in the SE, the account balance information of the contactless application according to the identification information of the contactless application carried in the transaction instruction; and
the intelligent terminal performs transaction processing according to the account balance information of the contactless application and the transaction amount information of the contactless application that is carried in the transaction instruction, and then generates the answer message received by the Bluetooth communication module.

According to the mobile payment method and apparatus, and the Near Field Communication device provided in the present invention, an NFC device first receives, by using NFC, a transaction instruction sent by a card reader; then sends the transaction instruction to an intelligent terminal by using Bluetooth; receives, by using the Bluetooth, an answer message sent by the intelligent terminal, where the answer message is generated by the intelligent terminal according to the transaction instruction; and finally sends the answer message to the card reader by using the NFC. Compared with existing mobile payment that is implemented directly by using an intelligent terminal having an NFC function, in the present invention, an NFC device forwards, to an intelligent terminal, a transaction instruction sent by a card reader, and forwards, to the card reader, an answer message sent by the intelligent terminal, so that a user is prevented from performing mobile payment directly by using an intelligent terminal with poorer flexibility, that is, the user needs only to put the NFC device with better flexibility close to the card reader, and mobile payment can be implemented. Therefore, flexibility of mobile payment can be improved, and further, user experience can be improved.

### BRIEF DESCRIPTION OF DRAWINGS

To describe the technical solutions in the present invention or in the prior art more clearly, the following briefly describes the accompanying drawings required for describing the present invention or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a mobile payment method according to an embodiment of the present invention;
FIG. 2 is a flowchart of another mobile payment method according to an embodiment of the present invention;
FIG. 3 is a schematic diagram of a hardware structure for mobile payment according to an embodiment of the present invention;
FIG. 4 is a schematic diagram of another hardware structure for mobile payment according to an embodiment of the present invention;
FIG. 5 is a schematic structural diagram of a mobile payment apparatus according to an embodiment of the present invention; and
FIG. 6 is a schematic structural diagram of an NFC device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

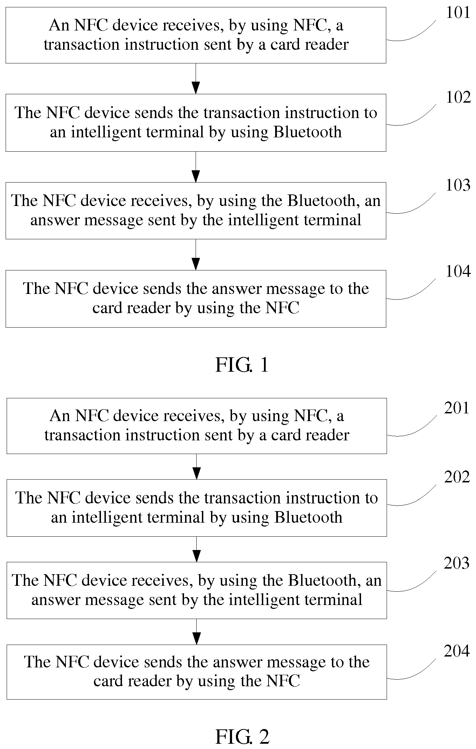

An embodiment of the present invention provides a mobile payment method, which can improve flexibility of mobile payment. As shown in FIG. 1, the method includes the following steps:
101. An NFC device receives, by using NFC, a transaction instruction sent by a card reader.

The transaction instruction is used to perform transaction processing for a contactless application. In this embodiment of the present invention, the transaction instruction may carry identification information and transaction amount information of the contactless application.

For this embodiment of the present invention, the transaction instruction may be specifically used to perform, on the contactless application, transaction processing such as fee deduction processing, recharge processing, and bonus point processing. For example, a transaction instruction may be used to perform fee deduction processing for a contactless application. In this case, identification information of the contactless application carried in the transaction instruction may be identification information corresponding to a "bus card application", and transaction amount information carried in a transaction command may be "to deduct a fee of 1 yuan". For another example, a transaction instruction may be used to perform recharge processing for a contactless application. In this case, identification information of the contactless application carried in the transaction instruction may be identification information corresponding to a "phone card application", and transaction amount information carried in a transaction command may be "to recharge 100 yuan". For still another example, a transaction instruction may be used to perform bonus point processing for a contactless application. In this case, identification information of the contactless application carried in the transaction instruction may be identification information corresponding to a "membership card application", and transaction amount information carried in a transaction command may be "a bonus of 20 points".
102. The NFC device sends the transaction instruction to an intelligent terminal by using Bluetooth.
   Further, the transaction instruction is sent to the intelligent terminal by using the NFC device, so that the intelligent terminal can perform transaction processing on the transaction instruction.
103. The NFC device receives, by using the Bluetooth, an answer message sent by the intelligent terminal.
   The answer message is generated by the intelligent terminal according to the transaction instruction. Specifically, the intelligent terminal first determines account balance information of the contactless application according to the identification information of the contactless application carried in the transaction instruction; and then performs transaction processing according to the account balance information of the contactless application and the transaction amount information of the contactless application that is carried in the transaction instruction, and then generates the answer message.
104. The NFC device sends the answer message to the card reader by using the NFC.

According to the mobile payment method provided in this embodiment of the present invention, an NFC device first receives, by using NFC, a transaction instruction sent by a card reader; then sends the transaction instruction to an intelligent terminal by using Bluetooth; receives, by using the Bluetooth, an answer message sent by the intelligent terminal, where the answer message is generated by the intelligent terminal according to the transaction instruction; and finally sends the answer message to the card reader by using the NFC. Compared with existing mobile payment that is implemented directly by using an intelligent terminal having an NFC function, in this embodiment of the present invention, an NFC device forwards, to an intelligent terminal, a transaction instruction sent by a card reader, and forwards, to the card reader, an answer message sent by the intelligent terminal, so that a user is prevented from performing mobile payment directly by using an intelligent terminal with poorer flexibility, that is, the user needs only to put the NFC device with better flexibility close to the card reader, and mobile payment can be implemented. Therefore, flexibility of mobile payment can be improved, and further, user experience can be improved.

For a specific description of the method shown in FIG. 1, an embodiment of the present invention provides another mobile payment method. As shown in FIG. 2, the method includes the following steps:
201. An NFC device receives, by using NFC, a transaction instruction sent by a card reader.

The transaction instruction carries identification information and transaction amount information of a contactless application, where the contactless application is a contactless application corresponding to the card reader. In this embodiment of the present invention, the intelligent terminal stores identification information of at least one contactless application and account balance information of the at least one contactless application.

For this embodiment of the present invention, the transaction instruction may be specifically used to perform, on the contactless application, transaction processing such as fee deduction processing, recharge processing, and bonus point processing. For example, a transaction instruction may be used to perform fee deduction processing for a contactless application. In this case, identification information of the contactless application carried in the transaction instruction may be a "bus card application", and transaction amount information carried in a transaction command may be "to deduct a fee of 1 yuan". For another example, a transaction instruction may be used to perform recharge processing for a contactless application. In this case, identification information of the contactless application carried in the transaction instruction may be a "phone card application", and transaction amount information carried in a transaction command may be "to recharge 100 yuan". For still another example, a transaction instruction may be used to perform bonus point processing for a contactless application. In this case, identification information of the contactless application carried in the transaction instruction may be a "membership card application", and transaction amount information carried in a transaction command may be "a bonus of 20 points".

For this embodiment of the present invention, communication between the card reader and the NFC device may be performed by using an NFC technology, where the NFC technology is a short-distance wireless connection technology evolved from an RFID technology. In this embodiment of the present invention, the card reader and the NFC device each have a contactless frontend (English: Contactless Frontend, CLF for short) and an NFC antenna. The CLF (that is, an NFC chip or an NFC controller) is configured to process a contactless radio frequency interface and a communications protocol. The NFC antenna is a near field coupling antenna, and is used to receive or send a signal in the NFC technology.

In this embodiment of the present invention, the card reader is a device that generates and sends the transaction instruction. For example, the card reader may be a device configured to swipe a bus card on a bus. In this case, a transaction instruction generated and sent by the card reader is used to perform fee deduction processing for a "bus card application". In this embodiment of the present invention, the contactless application may also be a metro card application, a shopping card application, a fitness card application, a meal card application, a point card application, a rechargeable card application, or the like.

It should be noted that the card reader is not limited to the foregoing device configured to swipe a bus card on a bus, and the transaction instruction is not limited to the foregoing performing fee deduction processing for a "bus card application" either. Any other scenario in which communication between a card reader and an NFC device can be performed by using an NFC is applicable to this embodiment of the present invention. For example, the card reader may be a device configured to perform, in a store, bonus point processing. In this case, a transaction instruction generated and sent by the card reader may be used to perform bonus point processing for a "point card application".
202. The NFC device sends the transaction instruction to an intelligent terminal by using Bluetooth.
   Further, the transaction instruction is sent to the intelligent terminal by using the NFC device, so that the intelligent terminal can perform transaction processing on the transaction instruction.
203. The NFC device receives, by using the Bluetooth, an answer message sent by the intelligent terminal.

The answer message is generated by the intelligent terminal according to the transaction instruction.

For this embodiment of the present invention, the intelligent terminal stores identification information of the at least one contactless application and account balance information of the at least one contactless application. Specifically, the intelligent terminal first determines account balance information of the contactless application according to the identification information of the contactless application carried in the transaction instruction; and then performs transaction processing according to the account balance information of the contactless application and the transaction amount information of the contactless application that is carried in the transaction instruction, and then generates the answer message.

For example, identification information of a contactless application carried in a transaction instruction is identification information corresponding to a "bus card application". An intelligent terminal first determines, in stored identification information of at least one contactless application and account balance information of the at least one contactless application, that account balance information of the "bus card application" is "80 yuan"; and then performs fee deduction processing according to the account balance information "80 yuan" of the contactless application and transaction amount information "to deduct a fee of 1 yuan" of the contactless application that is carried in the transaction instruction, and after the fee deduction processing, the account balance information of the "bus card application" is "79 yuan". For another example, identification information of a contactless application carried in a transaction instruction is identification information corresponding to a "point card application". An intelligent terminal first determines, in stored identification information of at least one contactless application and account balance information of the at least one contactless application, that account balance information of the "point card application" is "1000 points"; and then performs bonus point processing according to the account balance information "1000 points" of the contactless application and transaction amount information "a bonus of 20 points" of the contactless application that is carried in the transaction instruction, and after the bonus point processing, the account balance information of the "point card application" is "1020 points".

For this embodiment of the present invention, the answer message may carry transaction success information or transaction failure information. The transaction success information is generated after the intelligent terminal determines that the account balance information of the contactless application is greater than or equal to the transaction amount information of the contactless application. The transaction failure information is generated after the intelligent terminal determines that the account balance information of the contactless application is less than the transaction amount information of the contactless application.

For example, transaction amount information carried in a transaction command is "to deduct a fee of 1 yuan". If an account balance of a contactless application is "50 yuan", an intelligent terminal determines that account balance information of the contactless application is greater than or equal to transaction amount information of the contactless application, that is, the account balance of the contactless application is sufficient, and the intelligent terminal generates transaction success information; if an account balance of a contactless application is "0.5 yuan", an intelligent terminal determines that account balance information of the contactless application is less than transaction amount information of the contactless application, that is, the account balance of the contactless application is insufficient, and the intelligent terminal generates transaction failure information.
204. The NFC device sends the answer message to the card reader by using the NFC.

For this embodiment of the present invention, the intelligent terminal includes a secure element (English: Secure Element, SE for short), where the SE stores the identification information of the at least one contactless application and the account balance information of the at least one contactless application. In this embodiment of the present invention, the SE may be integrated into at least one of a subscriber identity module (English: Subscriber Identity Module, SIM for short) card, a user identity module (English: User Identity Module, UIM for short) card, a secure digital memory card (English: Secure Digital Memory Card, SD for short), and the intelligent terminal.

For this embodiment of the present invention, when the intelligent terminal includes multiple SEs, the intelligent terminal first determines an SE corresponding to the contactless application according to the identification information of the contactless application carried in the transaction instruction; then determines, in the SE, account balance information of the contactless application according to the identification information of the contactless application carried in the transaction instruction; and finally performs transaction processing according to the account balance information of the contactless application and the transaction amount information of the contactless application that is carried in the transaction instruction, and then generates the answer message.

For example, when an SE is integrated into a SIM card and another SE is integrated into an intelligent terminal, after the SIM card is mounted into the intelligent terminal, the intelligent terminal has two SEs. In this case, a correspondence between contactless applications of a user and the two SEs needs to be preconfigured. It is assumed that contactless applications of the user include a bus card application, a metro card application, a shopping card application, a meal card application, a point card application, and a rechargeable card application, where the SE integrated into the SIM card stores identification information of the bus card application and the metro card application, and respective corresponding account balance information; the another SE integrated into the intelligent terminal stores identification information of the shopping card application, the meal card application, the point card application, and the rechargeable card application, and respective corresponding account balance information. When identification information carried in a transaction instruction is identification information corresponding to the "bus card application", an SE that is corresponding to the contactless application and is determined by the intelligent terminal is the SE integrated into the SIM card; when identification information carried in a transaction instruction is identification information corresponding to the "shopping card application", an SE that is corresponding to the contactless application and is determined by the intelligent terminal is the another SE integrated into the intelligent terminal.

It should be noted that, in this embodiment of the present invention, identification information of a contactless application and account balance information of a contactless application are not limited to being stored in the foregoing SEs. Any other manner that can implement that the identification information of the contactless application and the account balance information of the contactless application are stored in an intelligent terminal is applicable to this embodiment of the present invention. For example, identification information of a contactless application and account balance information of a contactless application are stored in an application program of an intelligent terminal.

For this embodiment of the present invention, the NFC device may be a portable NFC device, and the portable NFC device may be a wearable NFC device. The wearable NFC device may be an NFC device of a finger ring shape, an NFC device of a hand ring shape, an NFC device of a wrist strap shape, or the like. In this embodiment of the present invention, the portable NFC device is used as a bridge between the card reader and the intelligent terminal, which can achieve that a user can implement communication with the card reader by using the NFC device with better flexibility, so that user experience can be improved.

For example, an NFC device may be an NFC device of a hand ring shape. When a user needs to perform an operation of swiping a bus card on a bus, the user needs only to put the NFC device of a hand ring shape close to a card reader on the bus, and the operation of swiping a bus card can be implemented; when a user needs to perform a recharge operation, the user needs only to put the NFC device of a hand ring shape close to a corresponding card reader, and the recharge operation can be implemented. In other words, after the user prebinds contactless applications of the user to an intelligent terminal and performs wireless connection between the intelligent terminal and the NFC device of a hand ring shape, for these contactless applications, the user needs only to put the NFC device of a hand ring shape close to a card reader, and corresponding processing can be implemented.

It should be noted that the portable NFC device is not limited to the wearable NFC device, and the wearable NFC device is not limited to the foregoing NFC device of a hand ring shape either. Any other portable NFC device such as a necklace-shaped NFC device or an NFC device of a key ring shape is applicable to this embodiment of the present invention.

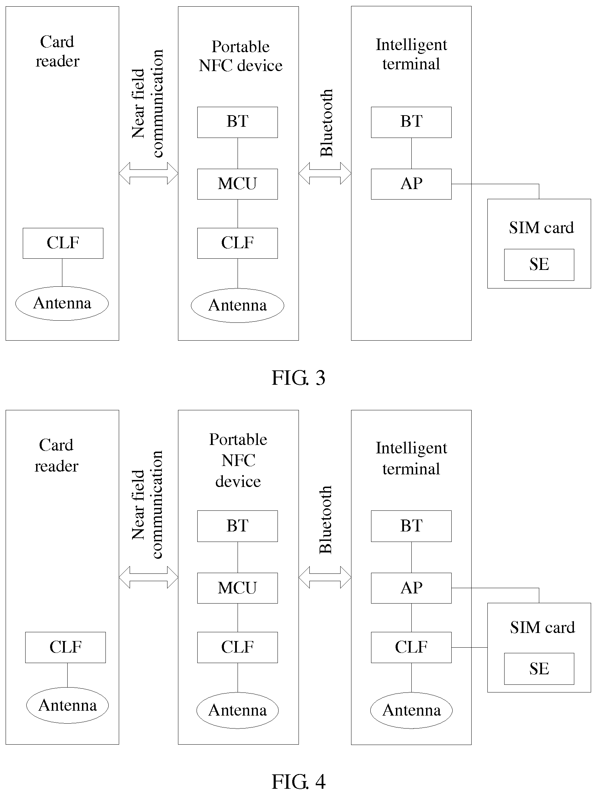

For this embodiment of the present invention, a schematic diagram of a hardware structure of a card reader, an NFC device, and an intelligent terminal may be shown in FIG. 3. The card reader may include a CLF and an NFC antenna; a portable NFC device may include a Bluetooth (English: Blue Tooth, BT for short) module, a micro controller unit (English: Micro Controller Unit, MCU for short), a CLF, and an NFC antenna; the intelligent terminal may include a BT module, an application processor (English: Application Processor, AP for short), and a secure element (English: Secure Element, SE for short) integrated into a SIM card.

For this embodiment of the present invention, when an intelligent terminal is an NFC intelligent terminal, a schematic diagram of a hardware structure of a card reader, an NFC device, and an intelligent terminal may be shown in FIG. 4. The card reader may include a CLF and an NFC antenna; a portable NFC device may include a BT, an MCU, a CLF and an NFC antenna; the NFC intelligent terminal may include a BT module, an AP, an SE integrated into a SIM card, a CLF, and an NFC antenna. In this embodiment of the present invention, the NFC intelligent terminal refers to an intelligent terminal having an NFC function. Compared with a common intelligent terminal, the NFC intelligent terminal includes a CLF and an NFC antenna, where the CLF is used to send a transaction instruction to an SE. In addition, when the NFC intelligent terminal has multiple SEs, the CLF is further configured to select an SE corresponding to an identifier of contactless application carried in a transaction instruction.

For this embodiment of the present invention, an existing NFC intelligent terminal can receive, by using an NFC antenna, a transaction instruction sent by a card reader, and send the transaction instruction to a corresponding SE by using a CLF. In this embodiment of the present invention, that a transaction instruction is sent to an SE by using the CLF included in the NFC intelligent terminal is similar to an existing mobile payment processing procedure of an intelligent terminal having an NFC function, so that modifications to an existing protocol can be reduced.

Specifically, in this embodiment of the present invention, when the intelligent terminal is the NFC intelligent terminal, a transaction instruction sent by the NFC device is first received by using the BT module in the NFC intelligent terminal; the transaction instruction is sent to the AP in the NFC intelligent terminal; then the AP in the NFC intelligent terminal determines a corresponding contactless application according to the transaction instruction and forwards the transaction instruction to the CLF in the NFC intelligent terminal by using the corresponding contactless application; and finally an SE corresponding to the contactless application is determined by the CLF in the NFC intelligent terminal according to the transaction instruction, and the transaction instruction is sent to the SE, so that the SE performs transaction processing. However, in the prior art, the NFC intelligent terminal first needs to approach a card reader, and a transaction instruction sent by the card reader is received by using the antenna in the NFC intelligent terminal; then the antenna in the NFC intelligent terminal sends the transaction instruction to the CLF in the NFC intelligent terminal; and finally the CLF in the NFC intelligent terminal determines an SE corresponding to the contactless application according to the transaction instruction, and sends the transaction instruction to the SE, so that the SE performs transaction processing.

For this embodiment of the present invention, as shown in FIG. 3, when the intelligent terminal is not the NFC intelligent terminal, a transaction instruction sent by the NFC device may be first received by using the BT module in the intelligent terminal, and the transaction instruction is sent to the AP in the NFC intelligent terminal; then the AP in the NFC intelligent terminal determines a corresponding SE according to the transaction instruction, and sends the transaction instruction to the SE, so that the SE performs transaction processing and the SE determines a corresponding contactless application. As shown in FIG. 4, when the intelligent terminal is the NFC intelligent terminal, a transaction instruction sent by the NFC device may be first received by the BT module in the NFC intelligent terminal, and the transaction instruction is sent to the AP in the NFC intelligent terminal; then the AP in the NFC intelligent terminal determines an application program corresponding to the contactless application according to the transaction instruction, where the application program corresponding to the contactless application resides in the AP, and the transaction instruction is forwarded to the CLF in the NFC intelligent terminal by using the corresponding application program; and finally the CLF in the NFC intelligent terminal determines an SE corresponding to the contactless application according to the transaction instruction, and sends the transaction instruction to the SE, so that the SE performs transaction processing.

It should be noted that the processor in the portable NFC device is not limited to the foregoing MCU. Any other processor that can be integrated into the portable NFC device is applicable to this embodiment of the present invention. The SE is not limited to being integrated into a SIM card. Any other manner in which an SE is integrated into an intelligent terminal is applicable to this embodiment of the present invention, for example, an SE is integrated into a UIM card, an SD card, or the intelligent terminal.

According to the mobile payment method provided in this embodiment of the present invention, an NFC device first receives, by using NFC, a transaction instruction sent by a card reader; then sends the transaction instruction to an intelligent terminal by using Bluetooth; receives, by using the Bluetooth, an answer message sent by the intelligent terminal, where the answer message is generated by the intelligent terminal according to the transaction instruction; and finally sends the answer message to the card reader by using the NFC. Compared with existing mobile payment that is implemented directly by using an intelligent terminal having an NFC function, in this embodiment of the present invention, an NFC device forwards, to an intelligent terminal, a transaction instruction sent by a card reader, and forwards, to the card reader, an answer message sent by the intelligent terminal, so that a user is prevented from performing mobile payment directly by using an intelligent terminal with poorer flexibility, that is, the user needs only to put the NFC device with better flexibility close to the card reader, and mobile payment can be implemented. Therefore, flexibility of mobile payment can be improved, and further, user experience can be improved.

Further, according to the mobile payment method provided in this embodiment of the present invention, the portable NFC device is used as a bridge between the card reader and the intelligent terminal, which can achieve that a user can implement communication between the card reader and the intelligent terminal by using the NFC device with better flexibility, so as to improve user experience. That a transaction instruction is sent to an SE by using a CLF included in an NFC intelligent terminal is close to an existing mobile payment processing procedure of an intelligent terminal having an NFC function, so that modifications to an existing protocol can be reduced.

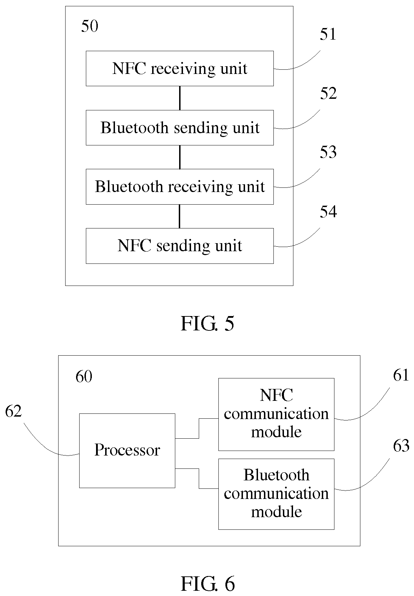

Further, for implementation of the methods shown in FIG. 1 and FIG. 2, an embodiment of the present invention further provides a mobile payment apparatus, configured to improve flexibility of mobile payment. As shown in FIG. 5, the apparatus 50 includes: an NFC receiving unit 51, a Bluetooth sending unit 52, a Bluetooth receiving unit 53, and an NFC sending unit 54.

The NFC receiving unit 51 is configured to receive, by using NFC, a transaction instruction sent by a card reader.

The Bluetooth sending unit 52 is configured to send, to an intelligent terminal by using Bluetooth, the transaction instruction received by the NFC receiving unit 51.

The Bluetooth receiving unit 53 is configured to receive, by using the Bluetooth, an answer message sent by the intelligent terminal.

The answer message is generated by the intelligent terminal according to the transaction instruction sent by the Bluetooth sending unit 52.

The NFC sending unit 54 is configured to send, to the card reader by using the NFC, the answer message received by the Bluetooth receiving unit 53.

The transaction instruction received by the NFC receiving unit 51 carries identification information and transaction amount information of a contactless application, where the contactless application is a contactless application corresponding to the card reader.

Optionally, the intelligent terminal stores identification information of at least one contactless application and account balance information of the at least one contactless application. For this embodiment of the present invention, the intelligent terminal first determines account balance information of the contactless application according to the identification information of the contactless application that is carried in the transaction instruction sent by the Bluetooth sending unit 52; and then performs transaction processing according to the account balance information of the contactless application and the transaction amount information of the contactless application that is carried in the transaction instruction, and then generates the answer message received by Bluetooth receiving unit.

The answer message received by the Bluetooth receiving unit 53 carries transaction success information or transaction failure information.

The transaction success information is generated after the intelligent terminal determines that the account balance information of the contactless application is greater than or equal to the transaction amount information of the contactless application. The transaction failure information is generated after the intelligent terminal determines that the account balance information of the contactless application is less than the transaction amount information of the contactless application.

Optionally, the intelligent terminal may include a secure element SE, where the SE stores the identification information of the at least one contactless application and the account balance information of the at least one contactless application, and the SE is integrated into at least one of a subscriber identity module SIM card, a user identity module UIM card, a secure digital memory card SD, or the intelligent terminal.

For this embodiment of the present invention, when the intelligent terminal includes multiple SEs, the intelligent terminal first determines an SE corresponding to the contactless application according to the identification information of the contactless application that is carried in the transaction instruction sent by the Bluetooth sending unit 52; then determines, in the SE, the account balance information of the contactless application according to the identification information of the contactless application carried in the transaction instruction; and finally performs transaction processing according to the account balance information of the contactless application and the transaction amount information of the contactless application that is carried in the transaction instruction, and then generates the answer message received by the Bluetooth receiving unit.

According to the mobile payment apparatus provided in this embodiment of the present invention, first a transaction instruction sent by a card reader is received by using NFC; then the transaction instruction is sent to an intelligent terminal by using Bluetooth; an answer message sent by the intelligent terminal is received by using the Bluetooth, where the answer message is generated by the intelligent terminal according to the transaction instruction; and finally the answer message is sent to the card reader by using the NFC. Compared with existing mobile payment that is implemented directly by using an intelligent terminal having an NFC function, in this embodiment of the present invention, an NFC device forwards, to an intelligent terminal, a transaction instruction sent by a card reader, and forwards, to the card reader, an answer message sent by the intelligent terminal, so that a user is prevented from performing mobile payment directly by using an intelligent terminal with poorer flexibility, that is, the user needs only to put the NFC device with better flexibility close to the card reader, and mobile payment can be implemented. Therefore, flexibility of mobile payment can be improved, and further, user experience can be improved.

Further, according to the mobile payment apparatus provided in this embodiment of the present invention, the portable NFC device is used as a bridge between the card reader and the intelligent terminal, which can achieve that a user can implement communication between the card reader and the intelligent terminal by using the NFC device with better flexibility, so as to improve user experience. That a transaction instruction is sent to an SE by using a CLF included in an NFC intelligent terminal is close to an existing mobile payment processing procedure of an intelligent terminal having an NFC function, so that modifications to an existing protocol can be reduced.

It should be noted that for other corresponding descriptions of units in the mobile payment apparatus 50 provided in this embodiment of the present invention, refer to the corresponding descriptions in FIG. 1 and FIG. 2, and details are not described herein again.

Further, an embodiment of the present invention further provides an NFC device, so as to improve flexibility of mobile payment. As shown in FIG. 6, the NFC device 60 includes: an NFC communication module 61, a processor 62, and a Bluetooth communication module 63.

The NFC communication module 61 is configured to receive, by using NFC, a transaction instruction sent by a card reader.

For this embodiment of the present invention, the NFC communication module 61 may be specifically a communication module including an antenna and a CLF.

The processor 62 is configured to forward the transaction instruction received by the NFC communication module 61 to the Bluetooth communication module 63.

For this embodiment of the present invention, the processor 62 may be specifically an MCU. It should be noted that the processor 62 in the NFC device 60 is not limited to the foregoing MCU. Any other processor 62 that can be integrated into the NFC device 60 is applicable to this embodiment of the present invention.

The Bluetooth communication module 63 is configured to send, to an intelligent terminal by using Bluetooth, the transaction instruction received by the NFC communication module 61, and receive, by using the Bluetooth, an answer message sent by the intelligent terminal, where the answer message is generated by the intelligent terminal according to the transaction instruction.

For this embodiment of the present invention, the Bluetooth communication module 63 may be specifically a BT module.

The processor 62 is further configured to forward the answer message received by the Bluetooth communication module 63 to the NFC communication module 61.

The NFC communication module 61 is further configured to send, to the card reader by using the NFC, the answer message received by the Bluetooth communication module 63.

The transaction instruction received by the NFC communication module 61 carries identification information and transaction amount information of a contactless application, where the contactless application is a contactless application corresponding to the card reader.

Optionally, the intelligent terminal stores identification information of at least one contactless application and account balance information of the at least one contactless application. For this embodiment of the present invention, the intelligent terminal first determines account balance information of the contactless application according to the identification information of the contactless application that is carried in the transaction instruction sent by the Bluetooth communication module 63; and then performs transaction processing according to the account balance information of the contactless application and the transaction amount information of the contactless application that is carried in the transaction instruction, and then generates the answer message received by the Bluetooth communication module 63.

The answer message received by the Bluetooth communication module 63 carries transaction success information or transaction failure information.

The transaction success information is generated after the intelligent terminal determines that the account balance information of the contactless application is greater than or equal to the transaction amount information of the contactless application. The transaction failure information is generated after the intelligent terminal determines that the account balance information of the contactless application is less than the transaction amount information of the contactless application.

Optionally, the intelligent terminal includes a secure element SE, where the SE stores the identification information of the at least one contactless application and the account balance information of the at least one contactless application, and the SE is integrated into at least one of a subscriber identity module SIM card, a user identity module UIM card, a secure digital memory card SD, or the intelligent terminal.

For this embodiment of the present invention, when the intelligent terminal includes multiple SEs, the intelligent terminal first determines an SE corresponding to the contactless application according to the identification information of the contactless application that is carried in the transaction instruction sent by the Bluetooth communication module 63; then determines, in the SE, account balance information of the contactless application according to the identification information of the contactless application carried in the transaction instruction; and finally performs transaction processing according to the account balance information of the contactless application and the transaction amount information of the contactless application that is carried in the transaction instruction, and then generates the answer message received by the Bluetooth communication module 63.

According to the NFC device provided in this embodiment of the present invention, the NFC device first receives, by using NFC, a transaction instruction sent by a card reader; then sends the transaction instruction to an intelligent terminal by using Bluetooth; receives, by using the Bluetooth, an answer message sent by the intelligent terminal, where the answer message is generated by the intelligent terminal according to the transaction instruction; and finally sends the answer message to the card reader by using the NFC. Compared with existing mobile payment that is implemented directly by using an intelligent terminal having an NFC function, in this embodiment of the present invention, an NFC device forwards, to an intelligent terminal, a transaction instruction sent by a card reader, and forwards, to the card reader, an answer message sent by the intelligent terminal, so that a user is prevented from performing mobile payment directly by using an intelligent terminal with poorer flexibility, that is, the user needs only to put the NFC device with better flexibility close to the card reader, and mobile payment can be implemented. Therefore, flexibility of mobile payment can be improved, and further, user experience can be improved.

Further, according to the NFC device provided in this embodiment of the present invention, the portable NFC device is used as a bridge between the card reader and the intelligent terminal, which can achieve that a user can implement communication between the card reader and the intelligent terminal by using the NFC device with better flexibility, so as to improve user experience. That a transaction instruction is sent to an SE by using a CLF included in an NFC intelligent terminal is close to an existing mobile payment processing procedure of an intelligent terminal having an NFC function, so that modifications to an existing protocol can be reduced.

It should be noted that for corresponding descriptions of functions and methods implemented by the NFC device 60 provided in this embodiment of the present invention, refer to the corresponding descriptions in FIG. 1 or FIG. 2, and details are not described herein again.

The mobile payment apparatus and the NFC device provided in the embodiments of the present invention can implement the foregoing provided method embodiments. For specific function implementation, refer to the descriptions in the method embodiments, and details are not described herein again. The mobile payment method and apparatus, and the Near Field Communication device provided in the embodiments of the present invention can be applicable to mobile payment implemented by using the NFC, but are not limited thereto.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A mobile payment method, comprising:
Receiving, by a Near Field Communication NFC device by using NFC, a transaction instruction sent by a card reader;
Sending, by the NFC device, the transaction instruction to an intelligent terminal by using Bluetooth;
receiving, by the NFC device by using the Bluetooth, an answer message sent by the intelligent terminal, wherein the answer message is generated by the intelligent terminal according to the transaction instruction; and
sending, by the NFC device, the answer message to the card reader by using the NFC.

2. The method according to claim 1, wherein the transaction instruction carries identification information and transaction amount information of a contactless application, wherein the contactless application is a contactless application corresponding to the card reader; and
the intelligent terminal stores identification information of at least one contactless application and account balance information of the at least one contactless application.

3. The method according to claim 2, wherein that the answer message is generated by the intelligent terminal according to the transaction instruction is specifically that:
the intelligent terminal determines account balance information of the contactless application according to the identification information of the contactless application carried in the transaction instruction; and
the intelligent terminal performs transaction processing according to the account balance information of the contactless application and the transaction amount information of the contactless application that is carried in the transaction instruction, and then generates the answer message.

4. The method according to claim 3, wherein the answer message carries transaction success information or transaction failure information; wherein
the transaction success information is generated after the intelligent terminal determines that the account balance information of the contactless application is greater than or equal to the transaction amount information of the contactless application; and
the transaction failure information is generated after the intelligent terminal determines that the account balance information of the contactless application is less than the transaction amount information of the contactless application.

5. The method according to any one of claims 2 to 4, wherein the intelligent terminal comprises a secure element SE, wherein the SE stores the identification information of the at least one contactless application and the account balance information of the at least one contactless application, and the SE is integrated into at least one of a subscriber identity module SIM card, a user identity module UIM card, a secure digital memory card SD, or the intelligent terminal; and
when the intelligent terminal comprises multiple SEs, that the answer message is generated by the intelligent terminal according to the transaction instruction is specifically that:
the intelligent terminal determines an SE corresponding to the contactless application according to the identification information of the contactless application carried in the transaction instruction;
the intelligent terminal determines, in the SE, the account balance information of the contactless application according to the identification information of the contactless application carried in the transaction instruction; and
the intelligent terminal performs transaction processing according to the account balance information of the contactless application and the transaction amount information of the contactless application that is carried in the transaction instruction, and then generates the answer message.

6. A mobile payment apparatus, comprising:
an NFC receiving unit, configured to receive, by using NFC, a transaction instruction sent by a card reader;
a Bluetooth sending unit, configured to send, to an intelligent terminal by using Bluetooth, the transaction instruction received by the NFC receiving unit;
a Bluetooth receiving unit, configured to receive, by using the Bluetooth, an answer message sent by the intelligent terminal, wherein the answer message is generated by the intelligent terminal according to the transaction instruction sent by the Bluetooth sending unit; and
an NFC sending unit, configured to send, to the card reader by using the NFC, the answer message received by the Bluetooth receiving unit.

7. The apparatus according to claim 6, wherein
the transaction instruction received by the NFC receiving unit carries identification information and transaction amount information of a contactless application, wherein the contactless application is a contactless application corresponding to the card reader; and
the intelligent terminal stores identification information of at least one contactless application and account balance information of the at least one contactless application.

8. The apparatus according to claim 7, wherein
the intelligent terminal determines account balance information of the contactless application according to the identification information of the contactless application that is carried in the transaction instruction sent by the Bluetooth sending unit; and
the intelligent terminal performs transaction processing according to the account balance information of the contactless application and the transaction amount information of the contactless application that is carried in the transaction instruction, and then generates the answer message received by the Bluetooth receiving unit.

9. The apparatus according to claim 8, wherein
the answer message received by the Bluetooth receiving unit carries transaction success information or transaction failure information; wherein
the transaction success information is generated after the intelligent terminal determines that the account balance information of the contactless application is greater than or equal to the transaction amount information of the contactless application; and
the transaction failure information is generated after the intelligent terminal determines that the account balance information of the contactless application is less than the transaction amount information of the contactless application.

10. The apparatus according to any one of claims 7 to 9, wherein
the intelligent terminal comprises a secure element SE, wherein the SE stores the identification information of the at least one contactless application and the account balance information of the at least one contactless application, and the SE is integrated into at least one of a subscriber identity module SIM card, a user identity module UIM card, a secure digital memory card SD, or the intelligent terminal; and
when the intelligent terminal comprises multiple SEs, the intelligent terminal determines an SE corresponding to the contactless application according to the identification information of the contactless application that is carried in the transaction instruction sent by the Bluetooth sending unit;
the intelligent terminal determines, in the SE, the account balance information of the contactless application according to the identification information of the contactless application carried in the transaction instruction; and
the intelligent terminal performs transaction processing according to the account balance information of the contactless application and the transaction amount information of the contactless application that is carried in the transaction instruction, and then generates the answer message received by the Bluetooth receiving unit.

11. A Near Field Communication NFC device, comprising:
an NFC communication module, configured to receive, by using NFC, a transaction instruction sent by a card reader;
a processor, configured to forward the transaction instruction received by the NFC communication module to a Bluetooth communication module; and
the Bluetooth communication module, configured to send, to an intelligent terminal by using Bluetooth, the transaction instruction received by the NFC communication module, and receive, by using the Bluetooth, an answer message sent by the intelligent terminal, wherein the answer message is generated by the intelligent terminal according to the transaction instruction; wherein
the processor is further configured to forward the answer message received by the Bluetooth communication module to the NFC communication module; and
the NFC communication module is further configured to send, to the card reader by using the NFC, the answer message received by the Bluetooth communication module.

12. The NFC device according to claim 11, wherein
the transaction instruction received by the NFC communication module carries identification information and transaction amount information of a contactless application, wherein the contactless application is a contactless application corresponding to the card reader; and
the intelligent terminal stores identification information of at least one contactless application and account balance information of the at least one contactless application.

13. The NFC device according to claim 12, wherein
the intelligent terminal determines account balance information of the contactless application according to the identification information of the contactless application that is carried in the transaction instruction sent by the Bluetooth communication module; and
the intelligent terminal performs transaction processing according to the account balance information of the contactless application and the transaction amount information of the contactless application that is carried in the transaction instruction, and then generates the answer message received by the Bluetooth communication module.

14. The NFC device according to claim 13, wherein
the answer message received by the Bluetooth communication module carries transaction success information or transaction failure information; wherein
the transaction success information is generated after the intelligent terminal determines that the account balance information of the contactless application is greater than or equal to the transaction amount information of the contactless application; and
the transaction failure information is generated after the intelligent terminal determines that the account balance information of the contactless application is less than the transaction amount information of the contactless application.

15. The NFC device according to any one of claims 12 to 14, wherein
the intelligent terminal comprises a secure element SE, wherein the SE stores the identification information of the at least one contactless application and the account balance information of the at least one contactless application, and the SE is integrated into at least one of a subscriber identity module SIM card, a user identity module UIM card, a secure digital memory card SD, or the intelligent terminal; and
when the intelligent terminal comprises multiple SEs, the intelligent terminal determines an SE corresponding to the contactless application according to the identification information of the contactless application that is carried in the transaction instruction sent by the Bluetooth communication module;
the intelligent terminal determines, in the SE, the account balance information of the contactless application according to the identification information of the contactless application carried in the transaction instruction; and
the intelligent terminal performs transaction processing according to the account balance information of the contactless application and the transaction amount information of the contactless application that is carried in the transaction instruction, and then generates the answer message received by the Bluetooth communication module.
